# EUROPEAN PATENT APPLICATION

(11) **EP 4 764 649 A1**
(43) Date of publication of application: **24.06.2026**
(21) Application number: 24221714.9
(22) Date of filing: 19.12.2024
(51) Int. Cl.: G02B 26/00

(54) **ARRANGEMENT FOR COMBINED RESONANCE AND QUASISTATIC SCANNING MODES OF MEMS MIRRORS**

(71) Applicant: Murata Manufacturing Co., Ltd., Nagaokakyo-shi, Kyoto 617-8555 (JP)
(72) Inventor: TORKKELI, Altti, Tuusula 04340 (FI)
(74) Representative: Boco IP Oy Ab

(57) **Abstract**

The disclosure describes an arrangement comprising a spring-supported tiltable hermetic housing structure with an optical window and single-axis scanning mirror inside the housing structure. The arrangement enables the use of the resonance scanning mode of the mirror in vacuum, inside the housing structure, as well as the quasistatic scanning mode of the mirror by oscillating the housing structure in ambient pressure.

## Description

### FIELD OF THE DISCLOSURE

This disclosure relates to microelectromechanical devices and more particularly to devices which can be configured to direct a light beam. The present disclosure further concerns the control of scanning modes of MEMS mirrors.

### BACKGROUND OF THE DISCLOSURE

Microelectromechanical systems (MEMS) are the technology of microscopic devices that combine mechanical and electrical features. MEMS devices have various applications in electronics, optics, and sensors. MEMS mirrors, which are small-scale mirrors often part of MEMS devices, are typically used for redirecting or modulating light. They are valued for their small size, rapid response, and low power consumption, making them suitable for a wide range of applications where precise control of light direction is essential.

There are two modes in which MEMS mirrors can operate: resonance scanning mode and quasistatic scanning mode. In resonance scanning mode, MEMS mirrors operate at their natural resonant frequency. This mode leverages the mechanical properties of the mirror and its suspension system to achieve oscillations with minimal energy input. By driving the MEMS mirror at its resonant frequency, large angular displacements can be attained with low power consumption. This is particularly useful in applications requiring highspeed scanning, such as laser scanning displays, barcode readers, and LIDAR systems. The resonant mode is characterized by periodic oscillations, resulting in a sinusoidal scanning pattern. The high-frequency oscillations enable rapid coverage of the scanning area, making it suitable for tasks that benefit from fast and continuous scanning.

Quasistatic scanning mode, on the other hand, involves the movement of the MEMS mirror at much lower frequencies, typically far from the resonant frequency. In this mode, the mirror is driven by electrostatic or electromagnetic forces to achieve precise angular positions. Unlike the resonant mode, quasistatic scanning does not rely on the mirror's natural oscillations. Instead, it allows for controlled, incremental movements, making it ideal for applications that require high positional accuracy and stability, such as optical switching, precision imaging, and beam steering. The quasistatic mode provides the capability to hold the mirror in a fixed position or move it slowly and steadily to a desired angle, offering greater control over the scanning process.

Both resonance and quasistatic scanning modes can be utilized to exploit the benefits of each. For instance, the resonance mode can be used for rapid scanning across large areas, while the quasistatic mode can provide fine-tuning for detailed inspection or precise alignment. This combination enhances the versatility and performance of MEMS mirrors, enabling them to meet the demands of a wide range of optical applications. However, resonance scanning mode requires a hermetic package with an optical window and low internal gas pressure, whereas quasistatic scanning mode does not require low pressure. Moreover, quasistatic control is easier when parasitic resonances are gas-damped.

Document US20140159827A1 discloses a micromechanical resonator arrangement with an inner actuator and with an outer actuator. The inner and outer actuator form a coupled oscillation system. The inner actuator is at least one vacuum-encapsulated micro actuator chip which is fastened on the oscillating part of the Outer actuator.

### BRIEF DESCRIPTION OF THE DISCLOSURE

An object of the present disclosure is to provide a solution to the problem described above.

The disclosed solution allows the use of both resonance and quasistatic scanning modes of a MEMS mirror in a single arrangement. Examples provided in this disclosure describe ways to implement the solution. The solution is achieved by features of an arrangement comprising a mirror enclosed in a housing structure and the configuration of transducers which drive the movements of the mirror and the housing structure.

The object of the disclosure is achieved by an arrangement and a fabrication method which are characterized by what is stated in the independent claims. The preferred embodiments of the disclosure are disclosed in the dependent claims.

The disclosure is based on the idea of an arrangement comprising a spring-supported tiltable hermetic housing structure with an optical window and single-axis scanning mirror inside the housing structure. This arrangement enables the use of the resonance scanning mode of the mirror in vacuum, inside the housing structure, as well as the quasistatic scanning mode of the mirror by oscillating the housing structure in ambient pressure.

### BRIEF DESCRIPTION OF THE DRAWINGS

In the following, the disclosure will be described in greater detail by means of preferred embodiments with reference to the accompanying drawings, in which
Figure 1 illustrates an outer view of an arrangement comprising a mirror inside a housing structure in accordance with one embodiment of the invention. The outer transducers are not shown in this figure;
Figure 2a illustrates a vertical cross-section of an arrangement in the yz-plane in accordance with an embodiment of the invention. The housing structure is in rest position;
Figure 2b illustrates a schematic representation of the oscillatory motion of the housing structure shown in figure 2a about the x-axis;
Figure 2c illustrates a vertical cross-section of the arrangement in the x'z'-plane. The mirror is in rest position;
Figure 2d illustrates a schematic representation of the oscillatory motion of the mirror shown in figure 2c about the y'-axis;
Figure 3 illustrates a horizontal cross-section of an arrangement in accordance with one embodiment of the invention;
Figure 4a illustrates a horizontal cross-section of an arrangement in accordance with another embodiment of the invention. The arrangement comprises electrical conductors on top of the the first torsion structure;
Figure 4b illustrates an enlarged view of the section highlighted on figure 4a;
Figure 5a illustrates a schematic representation of an arrangement comprising comb-shaped actuators according to one embodiment of the invention. The rotor electrodes are not activated. The arrows show the cutting plane for the cross-section in figure 5c;
Figure 5b illustrates an example of the position of the comb-shaped electrodes shown in figure 5a during the electrical activation of the actuators. The arrows show the cutting plane for the cross-section in figure 5d;
Figure 5c illustrates a simplified cross section in the yz-plane of the arrangement as shown in figure 5a;
Figure 5d illustrates a simplified cross section in the yz-plane of the arrangement as shown in figure 5b. The housing structure oscillates about the x-axis;
Figure 6a illustrates a schematic representation of an arrangement comprising comb-shaped actuators according to another embodiment of the invention. The rotor electrodes are not activated. The arrows show the cutting plane for the cross-section in figures 6c;
Figure 6b illustrates an example of the position of the comb-shaped rotor electrodes shown in figure 6a during movement. The arrows show the cutting plane for the cross-section in figure 6d;
Figure 6c illustrates a simplified cross section in the yz-plane of the arrangement as shown in figure 6a. The housing structure is in rest position;
Figure 6d illustrates a simplified cross section in the yz-plane of the arrangement as shown in figure 6b. The housing structure oscillates about the x-axis;
Figures 7a-m illustrate an example method for the fabrication of the arrangement comprising a MEMS mirror enclosed in a housing structure in accordance with one embodiment of this disclosure;
Figures 8a-c illustrate a few steps of the method for the fabrication of the arrangement comprising a MEMS mirror enclosed in a housing structure in accordance with another embodiment of this disclosure;
Figure 9 illustrates a first and a second wafer direct-bonded together.

### DETAILED DESCRIPTION OF THE DISCLOSURE

The disclosure describes an arrangement comprising a fixed structure. The fixed structure defines a horizontal xy-plane, and there is vertical z-direction which is perpendicular to the xy-plane. The arrangement further comprises a mirror configured to reflect an incoming light beam, and a housing structure comprising a transparent surface. The housing structure is attached to the fixed structure via a first torsion structure. The first torsion structure allows the housing structure to rotate about the x-axis. The housing structure defines a x'-axis and a y'-axis wherein the x'-axis is parallel to the x-axis and the y'-axis is parallel to the y-axis when the housing structure is in its rest position and there is a vertical z'-direction which is perpendicular to the x'y'-plane. The mirror is inside the housing structure.

The mirror is suspended inside the housing structure via a second torsion structure which allows the mirror to rotate about the y'-axis. The transparent surface faces the reflecting surface of the mirror allowing the incoming light beam to reach the reflecting surface of the mirror.

The arrangement further comprises inner transducers located inside the housing structure. The inner transducers are attached to the mirror and are configured to tilt the mirror inside to housing structure about the y'-axis. The arrangement further comprises outer transducers located outside the housing structure. The outer transducers are configured to tilt the housing structure about the x-axis.

The rest position of the housing structure refers in this disclosure to the position of the housing structure when it is not moving. The rest position of the mirror refers to the position of the mirror when it is not moving. Any direction or plane which is parallel to the xy-plane can be called horizontal. The direction which is perpendicular to the xy-plane can be called the vertical direction. Expressions such as "top", "bottom", "above", "below", "up" and "down" refer in this disclosure to differences in the vertical z-coordinate. These expressions do not refer to the orientation of the arrangement with regard to the direction of earth's gravitational field either when the arrangement is manufactured or when it is in use.

The inner side of the transparent surface refers to the side of the transparent surface which faces the mirror. The outer side of the transparent surface refers to the side of the transparent surface which faces the surrounding of the arrangement.

The fixed structure may be a frame that surrounds the mirror. The mirror refers to a body having a least one reflecting surface. The mirror may be a single-axis scanning mirror. The mirror and the fixed structure may be formed in one or more device wafers. The one or more device wafers may be silicon wafers. These options may apply to any embodiment in this disclosure.

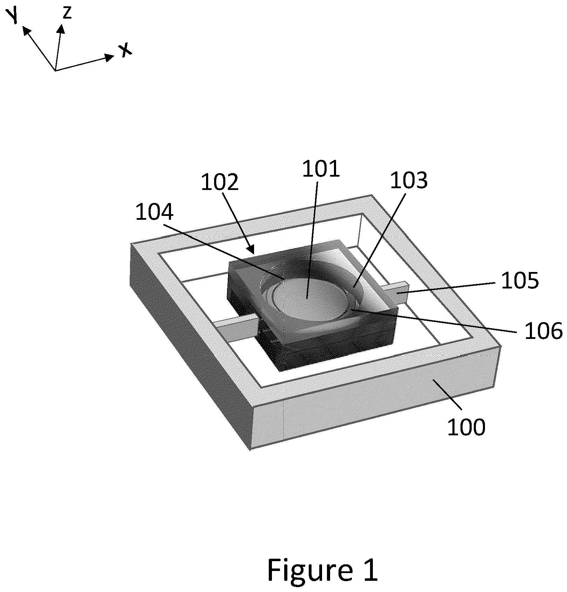

Figure 1 illustrates an outer view of an arrangement comprising a mirror inside a housing structure in accordance with one embodiment of the invention. The arrangement comprises a fixed structure 100 to which a housing structure 102 is attached via a first torsion structure. The first torsion structure may comprise two beams, wherein the beams are arranged opposite to each other along the x-axis, and each beam extends from the fixed structure to the housing structure. The beams may be straight beams. Alternatively, the beams may be meander beams. These options may apply to any embodiment in this disclosure. In this example, the first torsion structure comprises two straight beams 105 which are aligned along the x-axis. Each beam 105 is connected to a side of the housing structure 102, so that they allow the housing structure to oscillate about the x-axis.

The mirror 101 is attached to the inner walls of the housing structure 102 via a second torsion structure 104 which allows the mirror 101 to oscillate about the y'-axis. The second torsion structure may comprise a pair of meander beams. Alternatively, the second torsion structure may comprise a pair of straight beams.

The arrangement further comprises inner transducers 106 located inside the housing structure 102. The inner transducers are attached to the mirror 101 and are configured to tilt the mirror inside to housing structure about the y'-axis. In this example, both the housing structure and the mirror are in their rest positions. The shape of the inner transducers may be chosen to optimize the performance of the transducers in terms of electro-mechanical coupling efficiency, mechanical stability, achievable mirror tilt and contribution to frequency response of the inner mirror. It may include, but is not limited to, discs, rectangular plates, or rings. In this example, the inner transducers have a flat square shape. The inner transducers may be electrostatic actuators. Alternatively, the inner transducers may be piezoelectric actuators. These options may apply to any embodiment in this disclosure. The piezoelectric actuators may undergo physical deformation in response to an applied voltage. They can drive the oscillating movement of the mirror when they are controlled by, for example, a periodic AC voltage signal. The piezoelectric actuators are beneficial due to their wide design freedom which helps keeping the housing structure 102 compact.

The arrangement further comprises outer transducers (not shown in this figure 1) located outside the housing structure 102. The outer transducers are configured to tilt the housing structure 102 about the x-axis.

The housing structure comprises a transparent surface 103 through which the mirror 101 reflects an incoming light beam. The housing structure may hermetically seal the mirror. In other words, the mirror may be encapsulated in vacuum inside the housing structure. The arrangement may further comprise one or more antireflection coatings applied to the transparent surface which allows the incoming light beam to reach the mirror. The antireflection coatings may be applied either to the inner side of the transparent surface or to the outer side of the transparent surface. Alternatively, the antireflection coatings may be applied to both the inner and the outer sides of the transparent surface. These options may apply to any embodiment in this disclosure. In this example, the housing structure has a cubic shape. Alternatively, the housing structure may have a circular disc, elongated circular disc or oval shape. The housing structure may be made of silicon wafer. These options may apply to any embodiment in this disclosure.

The mirror may oscillate about the y'-axis inside the housing structure when the housing structure is in its rest position, and the housing structure may oscillate about the x-axis when the mirror is in a static position (i.e. when the mirror is in its rest position). Alternatively, the mirror and the housing structure may oscillate simultaneously about their respective axes.

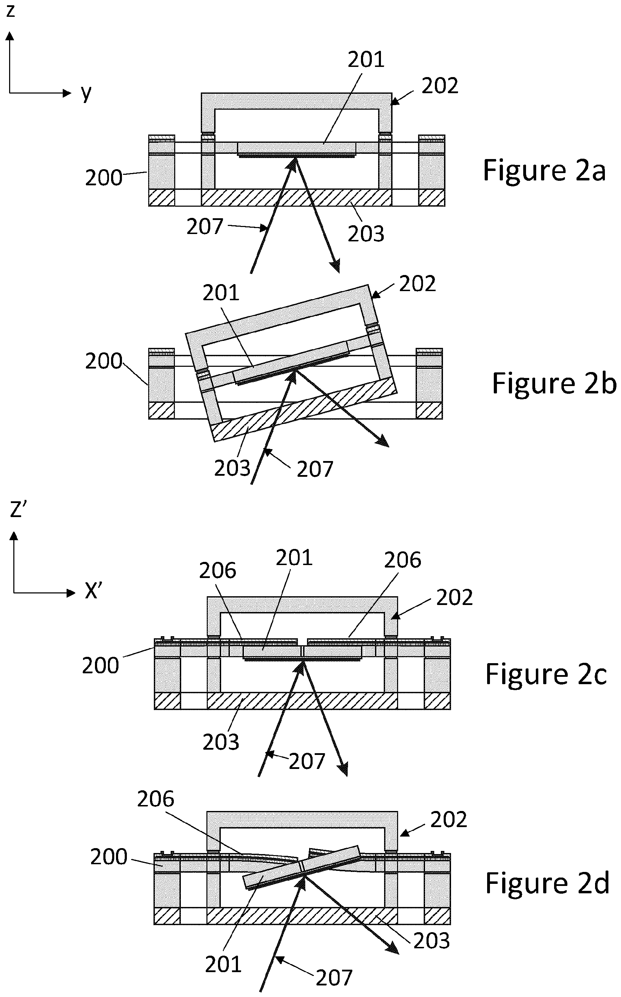

Figure 2a illustrates a vertical cross-section of an arrangement in the yz-plane in accordance with one embodiment of the invention. The arrangement comprises a fixed structure 200 to which a housing structure 202 is attached. The arrangement further comprises a mirror 201 inside the housing structure 202. The housing structure 202 comprises a transparent surface 203 through which incoming light beams 207 can be transmitted to and reflected by the mirror 201. In this example, both the housing structure and the mirror are in their rest positions. When the outer transducers (not shown here) are activated, the housing structure 202 oscillates about the x-axis via the first torsion structure (not seen here).

Figure 2b illustrates a schematic representation of the oscillatory motion of the housing structure about the x-axis. In this example, the mirror 201 is in rest position. In other words, the mirror 201 does not oscillate inside the housing structure 202. Consequently, the position of the reflecting surface of the mirror is controlled solely by the movement of the housing structure 202. As the housing structure 202 oscillates about the x-axis in ambient gas environment, quasistatic scanning mode of the mirror takes place. Ambient gases may include, and are not limited to air, nitrogen, argon, sulfur hexafluoride (SF6). These options may apply to any embodiment in this disclosure.

Figure 2c illustrates a vertical cross-section in the x'z'-plane of the arrangement shown in figure 2a. Both the housing structure 202 and the mirror 201 are in their rest positions. When the inner transducers 206 are activated, the mirror 201 oscillates about the y'-axis inside the housing structure 202 via the second torsion structure (not seen here).

Figure 2d illustrates a schematic representation of the oscillatory motion of the mirror 201 about the y'-axis inside the housing structure 202. In this example, housing structure 202 is in rest position. Consequently, the position of the reflecting surface of the mirror is controlled by the movement of mirror 201. As the mirror 201 oscillates about the y'-axis in vacuum, or in a low gas pressure, i.e. preferably below 100 mbar, resonance scanning mode of the mirror takes place. Possible gases may include but are not limited to air, nitrogen, or argon. These options may apply to any embodiment of this disclosure.

When the mirror and the housing structure oscillate at the same time about their respective axes, both the resonance scanning mode and the quasistatic scanning modes of the mirror take place simultaneously.

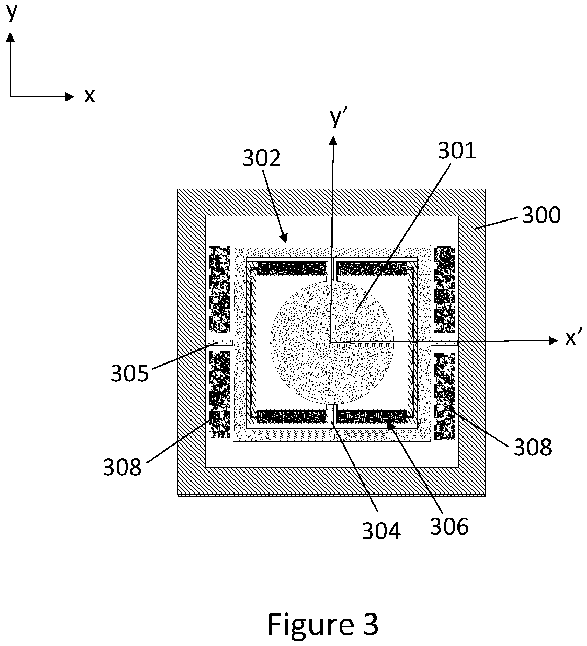

Figure 3 illustrates a horizontal cross-section of an arrangement in accordance with one embodiment of the invention. The arrangement comprises a housing structure 302. The housing structure 302 is attached to a fixed structure 300 via a first torsion structure comprising a pair of straight beams 305, wherein each beam extends along the x-axis from a side of the housing structure 302 to a side of the fixed structure 300. The arrangement further comprises a mirror 301 inside the housing structure 302. The mirror 301 is attached to the housing structure 302 via a second torsion structure 304. In this example, the second torsion structure comprises a pair of straight beams which are aligned along the y'-axis. The beams connect opposite sides of the mirror 301 to the inner wall of the housing structure 302, so that the mirror 301 can oscillate within the housing structure 302 about the y'-axis. In other words, the beams are arranged along the y'-axis so that they face each other on opposite sides of the mirror 301.

The housing structure 302 further encloses inner transducers 306 which are attached to the mirror 301 and are configured to tilt the mirror 301 about the y'-axis. For example, the inner transducers 306 may be piezoelectric rectangular plates. The arrangement further comprises outer transducers 308 which are arranged symmetrically on opposite sides of the beams 305 of the first torsion structure.

The arrangement may further comprise electrical conductors. The electrical conductors may be on top of the torsion structure. They may extend from the fixed structure to the inner transducers. The electrical conductors may connect to the inner transducers a first set of voltage contacts located in the fixed structure allowing the electrical drive of the inner transducers.

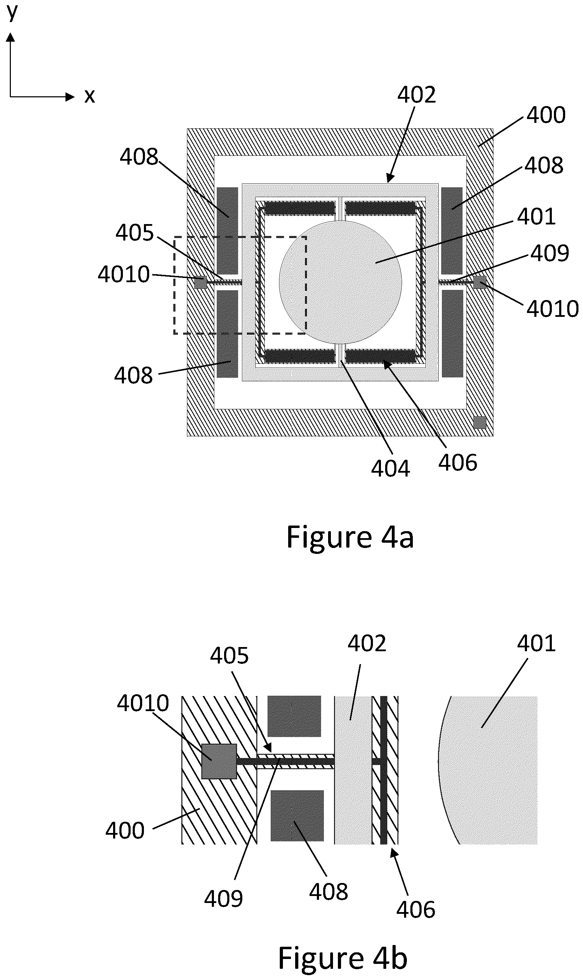

Figure 4a illustrates a horizontal cross-section of an arrangement in accordance with another embodiment of the invention. Figure 4b illustrates an enlarged view of the section highlighted on figure 4a. In this example, the arrangement further comprises two electrical conductors 409 on top of the first torsion structure. The electrical conductors 409 are attached to the beams 405 of the first torsion structure and extend from the fixed structure 400 to the inner transducers 406. The electrical conductors 409 connect to the inner transducers 406 a first set of voltage contacts 4010 which are located in the fixed structure 400 allowing the electrical drive of the inner transducers 406. Reference numbers 401, 402, 404 and 408 in figures 4a correspond to reference numbers 301, 302, 304 and 308, respectively, in figure 3.

The electrical conductors may comprise a variety of metals that include but are not limited to Al, Ti, W, TiW, Cu, Ag, Au, Pt, Pd, Mo or their combination as layers or metal alloys. They may be deposited by different methods such as sputtering, chemical vapor deposition, molecular beam epitaxy, electron beam physical vapor evaporation, or laser metal deposition. These options may apply to any embodiment in this disclosure.

The outer transducers may be piezoelectric actuators. Alternatively, the outer transducers may be electrostatic drive actuators. Each of the electrostatic drive actuators may be a comb-shaped actuator comprising three or more fingers. The fingers of the comb-shaped actuators may be perpendicular to the beams of the first torsion structure.

The outer transducers may comprise a first set of actuators and a second set of actuators. The first set of actuators and the second set of actuators may be located on opposite sides of the housing structure. Each of the first set of actuators and the second set of actuators may comprise at least one rotor electrode and at least one stator electrode arranged in an interdigitated shape, wherein one end of the at least one rotor electrode is attached to the top of the housing structure, and the at least one stator electrode is adjacent to the at least one rotor electrode, and the at least one stator electrode is connected to a voltage connection allowing the electrical drive of the outer transducers. In other words, the rotor electrode is connected to an electrical potential. The drive signal (voltage connection) is applied between the rotor electrode and the stator electrode.

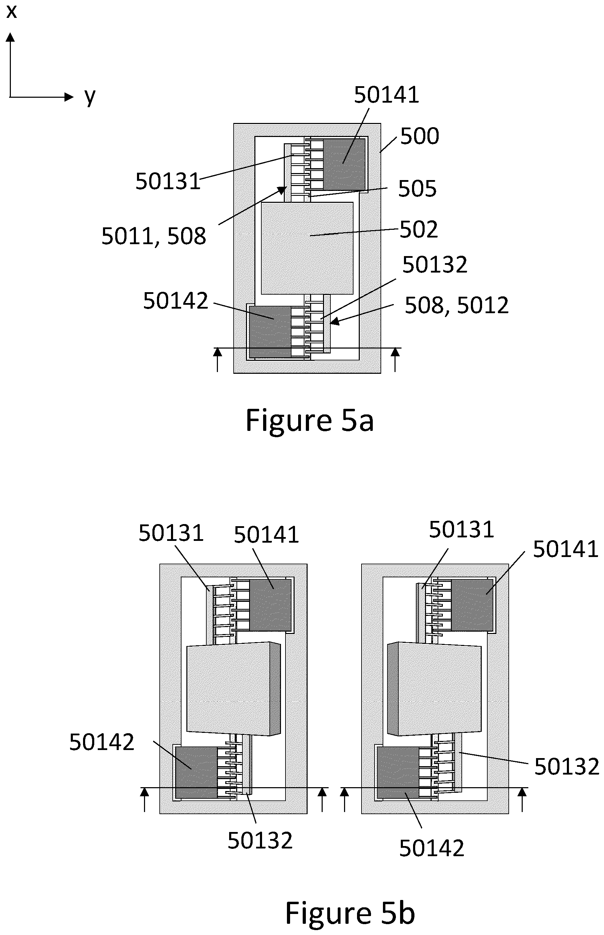

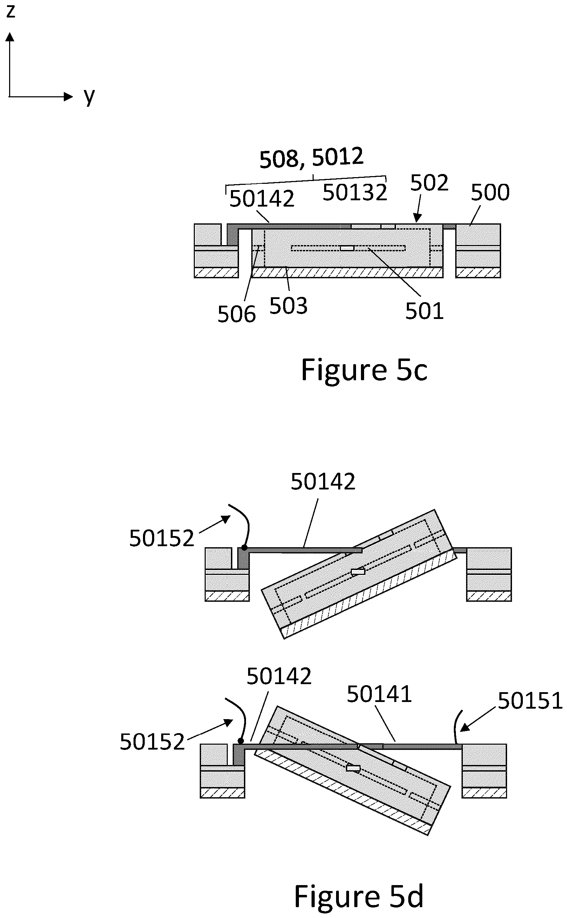

Figure 5a illustrates a schematic representation of an arrangement comprising comb-shaped actuators according to one embodiment of the invention. The arrows show the cutting plane for the cross-section of the component shown in figure 5c. In this example, the outer transducers 508 comprise a first set of actuators 5011 and a second set of actuators 5012. Each of the first set of actuators 5011 and the second set of actuators 5012 comprises a comb-shaped rotor electrode and a comb-shaped stator electrode with fingers. The rotor electrodes and the stator electrodes are arranged in an interdigitated manner so that their respective fingers are opposite to each other and are perpendicular to the first torsion structure 505. The first set of actuators 5011 and the second set of actuators 5012 are positioned along the x-direction on opposite sides of the housing structure 502 so that the rotor electrode in the first set of actuators 50131 is opposite the stator electrode in the second set of actuators 50142 across the yz-plane, and the stator electrode in the first set of actuators 50141 is opposite the rotor electrode in the second set of actuators 50132 across the yz-plane. One end of each rotor electrode is attached to the top of the housing structure 502. The stator electrode in the first set of actuators 50141 and the stator electrode in the second set of actuators 50142 are connected to separate voltage connections (not visible in this figure) allowing the electrical drive of the outer transducers 508. In this example, the outer transducers 508 are not activated. In other words, the actuators are not receiving the electrical signal (voltage) to initiate movement of the housing structure. Reference number 500 in figure 5a corresponds to reference numbers 100 in figure 1.

Figure 5b illustrates an example of the position of the comb-shaped electrodes shown in figure 5a during the electrical activation of the outer transducers. The figure on the right side shows a clockwise rotation of the housing structure. The figure on the left side shows a counterclockwise rotation of the housing structure. The arrows show the cutting plane for the cross-section of the component shown in figure 5d. When the outer transducers are electrically activated, the applied voltage causes the rotor electrodes to move relative to the stator electrodes. Depending on the design, this motion could be a linear displacement, a rotational movement, or a combination of both.

In the figure on the right side, the rotor electrode in the first set of actuators 50131 rotates towards the stator electrode of the first set of actuators 50141 so that their fingers overlap. As a result, the rotor electrode of the second set of actuators 50132 rotates away from the stator electrode in the second set of actuators 50142. In the figure on the left side, the rotor electrode in the second set of actuators 50132 rotates towards the stator electrode of the second set of actuators 50142 so that their fingers overlap and the rotor electrode of the first set of actuators 50131 rotates away from the stator electrode in the first set of actuators 50141. The interdigitated design of the electrodes enables the outer transducers 508 to produce finely controlled and coordinated oscillation of the housing structure 502 about the x-axis via the first torsion structure.

Figure 5c illustrates a simplified cross section in the yz-plane of the arrangement as shown in figure 5a. The arrangement of the rotor electrode in the first set of actuators 50131 and the stator electrode in the first set of actuators 50141 is the reverse reflection of the arrangement of the rotor electrode in the second set of actuators 50132 and the stator electrode in the second set of actuators 50142, i.e., the rotor electrode in the first set of actuators 50131 is opposite to the stator electrode in the second set of actuators 50142 across the yz-plane, and the stator electrode in the first set of actuators 50141 is opposite the rotor electrode in the second set of actuators 50132 across the yz-plane. Because only the second set of actuators 5012 is visible in this figure, features relating to the second set of actuators 5012 are described in detail. However, due to the symmetry of the structure, this description applies to the first set of actuators as well.

In this arrangement, the stator electrode 50142 in the second set of actuators is adjacent to the rotor electrode in the second set of actuators 50132 so that they form an interdigitated structure. The stator electrode in the second set of actuators 50142 may be connected to a voltage connection through which the second set of actuators 5012 can be activated. In this example, the outer transducers 508 are not activated, and the housing structure 502 is in rest position. Reference numbers 501, 503 and 506 in figure 5c correspond to reference numbers 101, 103 and 106, respectively in figure1.

Figure 5d illustrates a simplified cross section in the yz-plane of the arrangement as shown in figure 5b. This figure shows the movement of the housing structure 502 when the outer transducers are electrically activated. The figure on top shows the counterclockwise rotation of the housing structure. The figure at the bottom shows the clockwise rotation of the housing structure.

When the stator electrode 50142 in the second set of actuators is biased via an electrical connection 50152, an electric field is created between the interdigitated fingers of the stator electrode in the second set of actuators 50142 and the rotor electrode in the second set of actuators 50132. This electric field induces an electrostatic force that causes attraction between the interdigitated fingers of the stator electrode in the second set of actuators 50142 and the rotor electrode in the second set of actuators 50132. In other words, the rotor electrode fingers rotate closer to the stator electrode fingers. This causes the counterclockwise oscillation of the housing structure 502 about the x-axis.

When the stator electrode in the first set of actuators 50141 is biased via another electrical connection 50151, an electric field is created between the interdigitated fingers of the stator electrode in the first set of actuators 50141 and the rotor electrode in the first set of actuators 50131. This electric field induces an electrostatic force that causes attraction between the interdigitated fingers of the stator electrode in the first set of actuators 50141 and the rotor electrode in the first set of actuators 50131 and the rotor electrode fingers rotate closer to the stator electrode fingers. This causes the clockwise oscillation of the housing structure 502 about the x-axis.

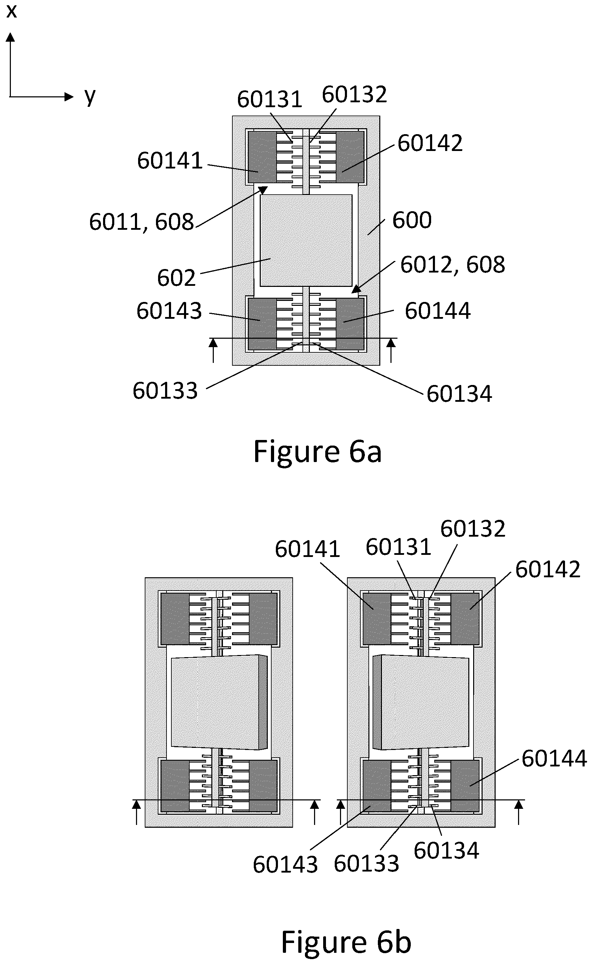

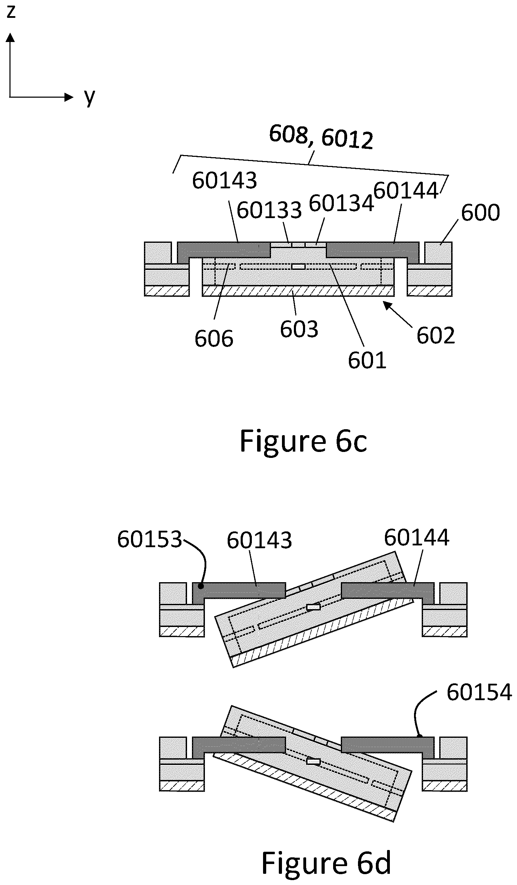

Figure 6a illustrates a schematic representation an arrangement comprising comb-shaped actuators according to another embodiment of the invention. The arrows show the cutting plane for the cross-section of the arrangement shown in figure 6c. In this example, the outer transducers 608 comprise a first set of actuators 6011 and a second set of actuators 6012, wherein the first set of actuators 6011 and the second set of actuators 6012 are arranged along the x-direction on opposite sides of the housing structure 602. The first set of actuators 6011 comprises a first comb-shaped rotor electrode 60131, a second comb-shaped rotor electrode 60132, a first comb-shaped stator electrode 60141 and a second comb-shaped stator electrode 60142. The second set of actuators 6012 comprises a third comb-shaped rotor electrode 60133, a fourth comb-shaped rotor electrode 60134, a third comb-shaped stator electrode 60143, and a fourth comb-shaped stator 60144. One end of each rotor electrode is attached to the top of the housing structure 602. The rotor electrodes in the first set of actuators, 60131 and 60132, are arranged back-to-back, and the rotor electrodes in the second set of actuators, 60133 and 60133, are also arranged back-to-back. In other words, in one set of actuators, the rotor electrodes are aligned so that their fingers extend in opposites directions. In one set of actuators, the fingers of each stator electrode, are positioned adjacent to the fingers of a rotor electrode in an interdigitated configuration, so that the stator electrodes mirror each other across the rotor electrodes. Reference number 600 in figure 6a corresponds to reference number 100 in figure 1.

Figure 6b illustrates an example of the position of the comb-shaped electrodes shown in figure 6a during the electrical activation of the outer transducers. The figure on the right side shows a clockwise rotation of the housing structure. The figure on the left side shows a counterclockwise rotation of the housing structure. The arrows show the cutting plane for the cross-section of the arrangement shown in figure 6d. The outer transducers may be electrically activated. When the outer transducers are electrically activated, the applied voltage causes the rotor electrodes to move relative to the stator electrodes. In other words, the back-to-back rotor electrodes rotate simultaneously towards one stator electrode, and as a result away from the other stator electrode.

For example, in case of the clockwise rotation of the housing structure 602, the first rotor electrode in the first set of actuators 60131 and the second rotor electrode in the first set of actuators 60132 rotate towards the second stator electrode in the first set of actuators 60142 and consequently away from the first stator electrode in the first set of actuators 60141. At the same time, the third rotor electrode in the second set of actuators 60133 and the fourth rotor electrode in the second set of actuators 60134 rotate towards the fourth stator electrode in the second set of actuators 60144 and consequently away from the third stator electrode in the second set of actuators 60143. In case of the counterclockwise rotation of the housing structure 602, the first rotor electrode in the first set of actuators 60131 and the second rotor electrode in the first set of actuators 60132 rotate towards the first stator electrode in the first set of actuators 60141 and as a result away from the second stator electrode in the first set of actuators 60142. At the same time, the third rotor electrode in the second set of actuators 60133 and the fourth rotor electrode in the second set of actuators 60134 rotate towards the third stator electrode in the second set of actuators 60143 and consequently away from the fourth stator electrode in the second set of actuators 60144.

Figure 6c illustrates a simplified cross section in the yz-plane of the arrangement as shown in figure 6a. Because only the second set of actuators 6012 is visible in this figure, features relating to the second set of actuators 6012 are described in detail. However, due to the symmetry of the structure, this description applies to the first set of actuators as well.

The third stator electrode in the second set of actuators 60143 and the fourth stator electrode in the second set of actuators 60144 may be connected to voltage connections so that the outer transducers 608 can be activated. In this example, the outer transducers 608 are not activated, and the housing structure 602 is in rest position. Reference numbers 600, 601, 603 and 606 in figure 6c correspond to reference numbers 100, 101, 103 and 106, respectively in figure1.

Figure 6d illustrates a simplified cross section in the yz-plane of the arrangement as shown in figure 6b. This figure shows the movement of the housing structure when the outer transducers are electrically activated. The figure on top shows the counterclockwise rotation of the housing structure. The figure at the bottom shows the clockwise rotation of the housing structure.

For example, in case of the counterclockwise rotation, when the third stator electrodes in the second set of actuators 60143 is biased via an electrical connection 60153, and electric field is created between the fingers of the third stator electrode in the second set of actuators 60143 and the third rotor electrode in the second set of actuators 60133. The electrical field causes attraction between the fingers of the third stator electrode in the second set of actuators 60143 and the fingers of the third rotor electrode in the second set of actuators 60133. Consequently, the third rotor electrode in the second set of actuators 60133 rotates towards the third stator electrode in the second set of actuators 60143, while the fourth rotor electrode in the second set of actuators 60134 moves away from the fourth stator electrode in the second set of actuators 60144. However, when the fourth stator electrodes in the second set of actuators 60144 is biased via another electrical connection 60154, the electric field is created between the fingers of the fourth stator electrode in the second set of actuators 60144 and the fourth rotor electrode in the second set of actuators 60134. The electrical field causes attraction between the fingers of the fourth stator electrode in the second set of actuators 60144 and the fingers of the fourth rotor electrode in the second set of actuators 60134. Consequently, the fourth rotor electrode in the second set of actuators 60134 rotates towards the fourth stator electrode in the second set of actuators 60144, while the third rotor electrode in the second set of actuators 60133 moves away from the third stator electrode in the second set of actuators 60143. This creates a clockwise rotation of the housing structure 602 about the x-axis. The repetition of the clockwise and counterclockwise rotations causes the oscillation of the housing structure 602 about the x-axis.

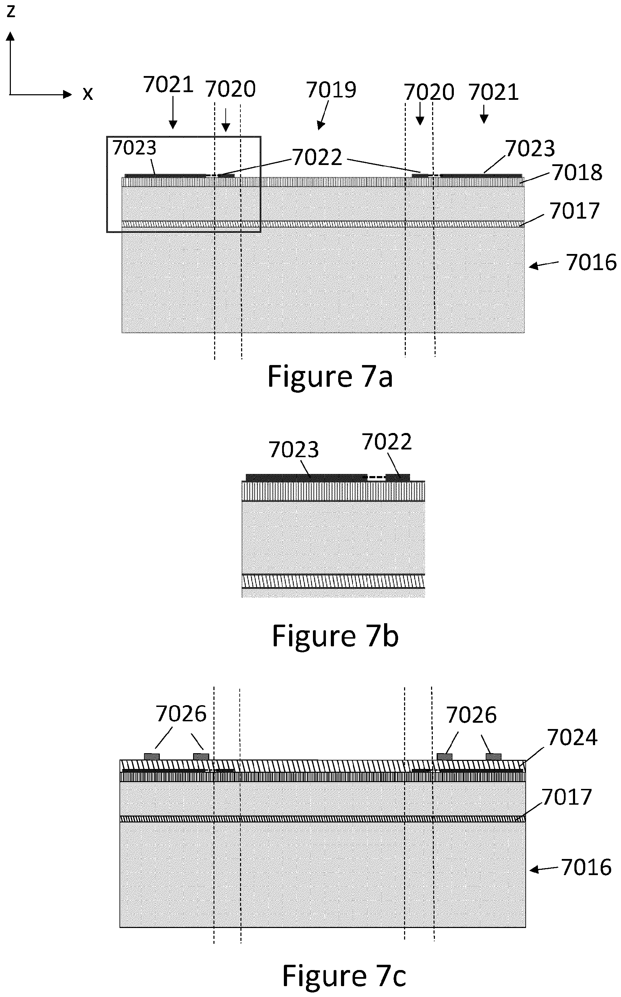

Figures 7a-m illustrate selected steps of a simplified example fabrication method of the arrangement comprising a MEMS mirror enclosed in a housing structure. They show a cross-sectional view of the component either in the xz-plane or in the xy-plane, and as a result, some parts of the arrangement are not visible in the selected figures perspective.

The method comprises: (1) providing a first wafer. The first wafer has a top surface and a bottom surface, and the top surface of the first wafer defines a horizontal xy-plane and a vertical z-direction which is perpendicular to the xy-plane. The first wafer comprises a buried oxide layer extending in the z-direction along a portion of the thickness of the first wafer, (2) forming a piezoelectric layer on the top surface of the first wafer. The top surface of the piezoelectric layer defines a central region, an intermediate region, and a peripheral region. The peripheral region surrounds the central region, and the intermediate region is located between the peripheral region and the central region, (3) forming a first pair of metal routing layers on top of the piezoelectric layer in the intermediate region, so that the metal routing layers are adjacent to opposite sides in the x-direction of the central region, and a second pair of metal routing layers on top of the piezoelectric layer in the peripheral region, so that the metal routing layers are adjacent to opposite sides in the x-direction of the intermediate region. Each metal routing layer in the first pair is connected to its neighbouring metal routing layer in the second pair, (4) forming insulating layers on top of the first pair and second pair of metal routing layers in the intermediate and peripheral regions, (5) forming a pair of openings in the peripheral region by patterning the insulating layers along the z-direction from the top of the insulating layers to the top of the second pair of metal routing layers. The openings are formed in the vicinity of the opposite edges of the peripheral region, (6) forming a pair of contacts by depositing a metal layer in each opening, (7) patterning the first wafer in the z-direction from the top surface of the insulating layers to the top surface of the buried oxide layer between the peripheral region and the intermediate region as well as between the intermediate region and the central region, (8) etching the exposed buried oxide layer in the first wafer, (9) providing a second wafer. The second wafer comprises a first horizontal part, a second horizontal part, and a third horizontal part. The second horizontal part surrounds the first horizontal part, and the third horizontal part surrounds the second horizontal part. The second wafer further comprises one or more protruding walls between the first and the second horizontal parts forming a crater-like cavity in the z-direction. The second wafer further comprises one or more additional protruding walls between the second and the third horizontal parts extending in the z-direction, (10) placing the second wafer on top of the first wafer so that the first wafer and the second wafer are aligned along the z-direction and that the crater-like cavity faces the central region of the first wafer, (11) bonding the edges of the crater-like cavity to the first wafer so that the crater-like cavity encloses the central region and the intermediate region of the first wafer, (12) Etching the first wafer in the z-direction from the bottom surface of the wafer to the bottom surface of the buried oxide layer in the central region, intermediate region, and in the parts of the peripheral region which are aligned in the z-direction with the areas between the one or more protruding walls and the one or more additional protruding walls of the second wafer, so that a first set of bottom walls and a second set of bottom walls are formed in the first wafer. The first set of bottom walls surrounds the central region and intermediate region (13) forming a reflecting layer on the bottom surface of the oxide layer in the central region of the first wafer, (14) providing a third wafer. The third wafer comprises a central glass region, and the central glass region extends in the z-direction though at least a portion of the thickness of the third wafer, (15) placing the first wafer on top of the third wafer so that the central glass region in the third wafer faces the reflecting layer, (16) bonding the third wafer to the first wafer, so that one or more protruding walls of the second wafer, the first set of bottom walls in the first wafer, and the third wafer enclose the central region and the intermediate region of the first wafer, (17) etching the third wafer so that the first set of bottom walls of the first wafer, the one or more protruding walls of the second wafer and the central glass region of the third wafer form a tiltable housing structure and the central glass region forms the bottom of the housing structure, (18) etching the third horizontal part of the second wafer and forming a structure comprising interdigitated fingers by patterning the second horizontal part on opposite sides of the first horizontal part.

The first wafer may be bonded to the second wafer by direct or anodic wafer bonding techniques. Alternatively, the first wafer may be metal bonded to the second wafer. These options may apply to any embodiment in this disclosure. When the metal bonding technique is used, the method may additionally comprise the step of forming bond metals on top of the insulating layer in the peripheral region of the first wafer after the step of forming a pair of contacts so that the bond metals are arranged opposite to each other in the x-direction on opposite sides of the central region, or forming bond metals on both the first wafer and the second wafer so that when the wafers are brought into contact at the bonding temperature a eutectic composition bond metal is formed which produces permanent bonding. However, when direct bonding is performed, no bond metals are needed, but the insulating layer needs to be smoothened and planarized using for example chemical mechanical planarization (CMP).

The third wafer may be a glass wafer. Alternatively, the third wafer may comprise glass regions and semiconductor regions. In both options, the third wafer can be joined using various bonding methods such as metal bonding, anodic bonding, or direct bonding. When the third wafer comprises glass regions and semiconductor regions, grinding and polishing is needed after wafer bonding.

Figure 7a illustrates a few steps of the example method. Figure 7b illustrates an enlargement of the arrangement section which is highlighted in figure 7a. The first step comprises providing a first wafer 7016 having a top surface and a bottom surface. The first wafer 7016 comprises a buried oxide layer 7017 extending in the z-direction along a portion of the thickness of the first wafer 7016. The first wafer may be a SOI wafer.

The next step comprises forming a piezoelectric layer 7018 on the top surface of the first wafer 7016. The top surface of the piezoelectric layer defines a central region 7019, an intermediate region 7020 and a peripheral region 7021. The peripheral region 7021 surrounds the central region 7019, and the intermediate region 7020 is located between the peripheral region 7021 and the central region 7019. The piezoelectric layer may be a AIN layer, AIScN, ZnO, PZT, LiNbO3, (K,Na)NbO3 (KNN) or any other piezoelectric material that can be arranged as a thin film. The thickness of the piezoelectric layer may be in the range of [0.1-10] µm. These options may apply to any embodiment in this disclosure.

Figure 7a also illustrates the step of forming a first pair of metal routing layers 7022 on top of the piezoelectric layer 7018 in the intermediate region 7020, so that the metal routing layers are adjacent to opposite sides in the x-direction of the central region 7019, and a second pair of metal routing layers 7023 on top of the piezoelectric layer 7018 in the peripheral region 7021, so that the metal routing layers are adjacent to opposite sides in the x-direction of the intermediate region 7020. Each metal routing layer in the first pair of metal routing layers 7022 is electrically connected to its neighbouring metal routing layer in the second pair of metal routing layers 7023 (the connection between the routing metal layers in the first pair and the routing metal layers in the second pair is not visible in this cross section but is represented by a dash line in figure 7b).

This step may for example comprise depositing a metal layer then patterning the metal layer to form the first pair of metal routing layer and the second pair of metal routing layer. The metal routing layers may comprise a variety of metals that include but are not limited to Al, Ti, W, TiW, Cu, Ag, Au, Pt, Pd, Mo or their combination as layers or metal alloys. The metal routing layers may be deposited by different methods such as sputtering, chemical vapor deposition, molecular beam epitaxy, electron beam physical vapor evaporation, or laser metal deposition. These options may apply to any embodiments in this disclosure.

Figure 7c illustrates the next few steps of the fabrication method. One step comprises forming insulating layers 7024 on top of the first pair of metal routing layers 7022 and the second pair of metal routing layers 7023 in the intermediate and peripheral regions, respectively. The insulating layer may be made of different materials such as SiOz, AlN, Al₂O₃ or Si₃N₄. The insulating layer may be deposited by different methods such as sputtering, chemical vapor deposition, molecular beam epitaxy, electron beam physical vapor evaporation, or spin coating. These options may apply to any embodiment in this disclosure.

In this example, the bonding of the housing structure is made using metal bonding, therefore two pairs of bond metals 7026 are also formed on top of the insulating layer 7024 in the peripheral region 7021. The pairs of bond metals 7026 are arranged opposite to each other in the x-direction on opposite sides of the central region. The bond metals may comprise a variety of metals that include but are not limited to Al, Ge, Ti, Cu, Sn, Ag, Au, Pt, Pd, Mo or their combination as layers or metal alloys. The bond metals may be formed by different methods such as sputtering, chemical vapor deposition, molecular beam epitaxy, electron beam physical vapor evaporation, electrolytic or electroless plating, or laser metal deposition.

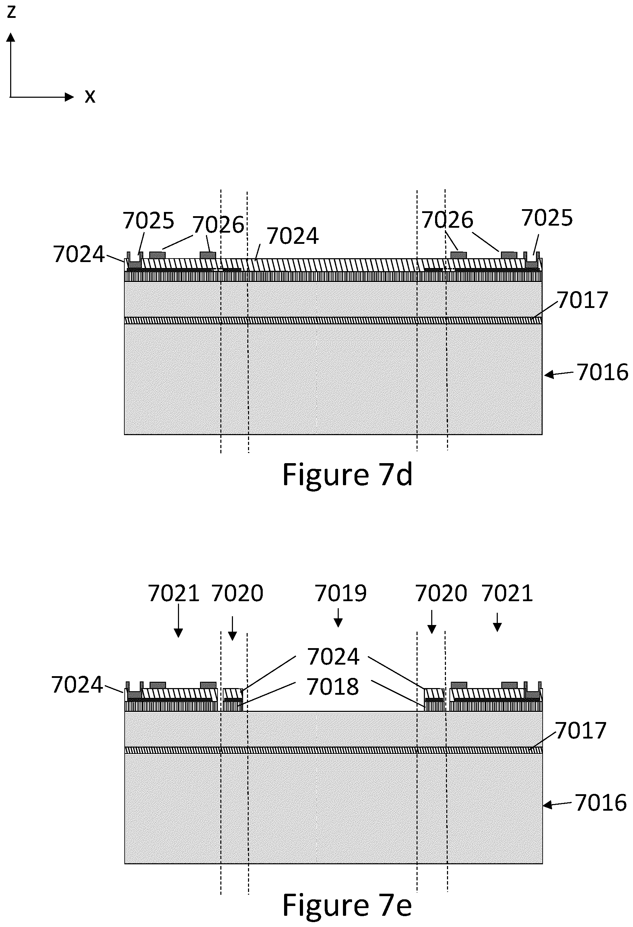

Figure 7d illustrates the step of forming a pair of openings in the peripheral region 7021 by patterning the insulating layer 7024 along the z-direction from the top of the insulating layers to the top of the second pair of metal routing layers 7023. The openings are formed in the vicinity of opposite edges of the peripheral region 7021. This step is followed by forming a pair of contacts 7025 by depositing a metal layer in each opening. The metal layer may comprise a variety of metals that include but are not limited to Al, Ti, W, TiW, Cu, Ag, Au, Pt, Pd, Mo or their combination as layers or metal alloys. The metal layer may be deposited by different methods such as sputtering, chemical vapor deposition, molecular beam epitaxy, electron beam physical vapor evaporation, or laser metal deposition. These options may apply to any embodiment in this disclosure.

Figure 7e illustrates the step of patterning the insulating layer 7024 and the piezoelectric layer 7018 in the z-direction from the top surface of the insulating layers 7024 to the top surface of the first wafer 7016 between the peripheral region 7021 and the intermediate region 7020 as well as in the central region 7019.

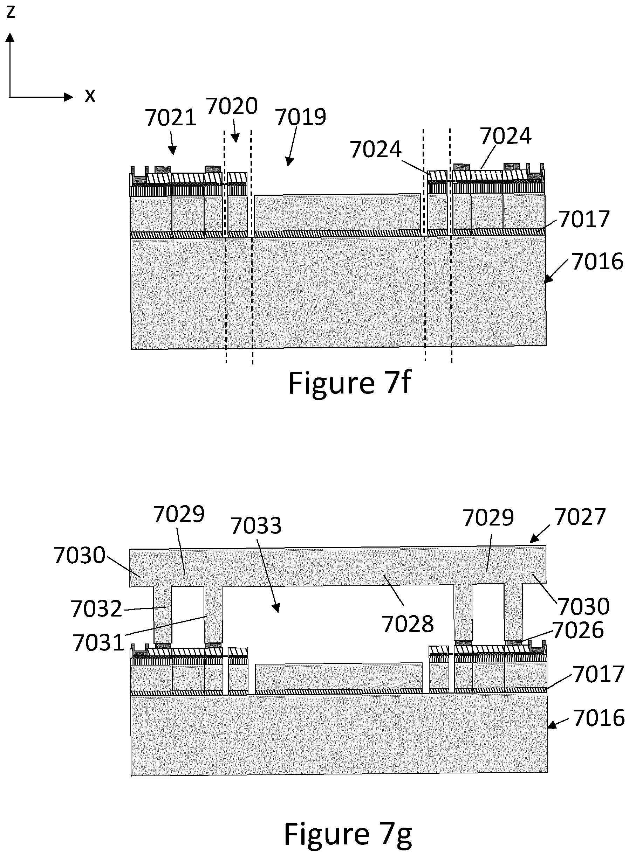

Figure 7f illustrates the step of patterning the first wafer in the z-direction from the top surface of the insulating layers 7024 to the top of the buried oxide layer 7017 between the peripheral region 7021 and the intermediate region 7020 as well as between the intermediate region 7020 and the central region 7019. This step is followed by etching the exposed buried oxide layer 7017.

Figure 7g illustrates further steps of the fabrication method. These steps comprise providing a second wafer 7027. The second wafer comprises a first horizontal part 7028, a second horizontal part 7029, and a third horizontal part 7030. The second horizontal part 7029 surrounds the first horizontal part 7028, and the third horizontal part 7030 surrounds the second horizontal part 7029.

The second wafer 7027 further comprises one or more protruding walls 7031 between the first and the second horizontal parts forming a crater-like cavity 7033 in the z-direction. The second wafer further comprises one or more additional protruding walls 7032 between the second and the third horizontal parts extending in the z-direction. The crater like cavity may have a circular shape. Alternatively, it may have oval, elongated circle, a square or rectangular shape. These options may apply to any embodiment in this disclosure.

Other steps of the fabrication method comprise placing the second wafer 7027 on top of the first wafer 7016 so that the first wafer 7016 and the second wafer 7027 are aligned along the z-direction and that the crater-like cavity 7033 faces the central region 7019 of the first wafer, then bonding the edges of the crater-like cavity (i.e., the one or more protruding walls 7031) to the first wafer 7016 so that the crater-like cavity 7033 encloses the central region 7019 and the intermediate region 7020 of the first wafer 7016.

In this example, the first wafer 7016 is metal bonded to the second wafer 7027. Therefore, the one or more protruding walls 7031 and the one or more additional protruding walls 7032 are bonded to the bond metals 7026.

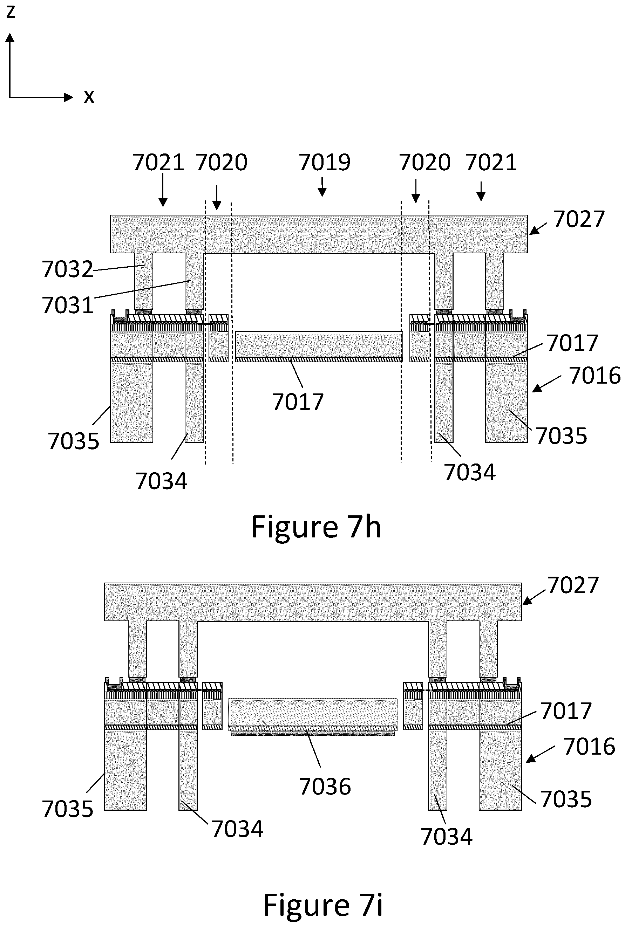

Figure 7h illustrates a further step of the fabrication method. This step comprises etching the first wafer 7016 in the z-direction from the bottom surface of the first wafer 7016 to the bottom surface of the buried oxide layer 7017 in the central region 7019, intermediate region 7020, and in the parts of the peripheral region 7021 which are aligned in the z-direction with the areas between the one or more protruding walls 7031 and the one or more additional protruding walls 7032 of the second wafer 7027, so that a first set of bottom walls 7034 and a second set of bottom walls 7035 are formed in the first wafer 7016. The first set of bottom walls 7034 surrounds the central region 7019 and intermediate region 7020.

Figure 7i illustrates the step of forming a reflecting layer 7036 on the bottom surface of the oxide layer in the central region 7019 of the first wafer. The reflecting layer may be film comprising one or more metals such as Al, Ag, Au, Ti, Pt, or their combination arranged as a stack of layers. Alternatively, it may comprise a stack of alternated layers of high and low refractive index materials such as Si and SiOz, so that they form a Bragg reflector. The reflecting layer 7036 may be formed by different methods that include but are not limited to evaporation or sputtering, preferentially using a shadow mask, laser assisted deposition, or direct atomic layer processing. The thickness of the reflecting layer may be in the range of [0.1 and 10] µm. These options may apply to any embodiment in this disclosure. Together, the central region of the first wafer and the reflecting layer form a mirror.

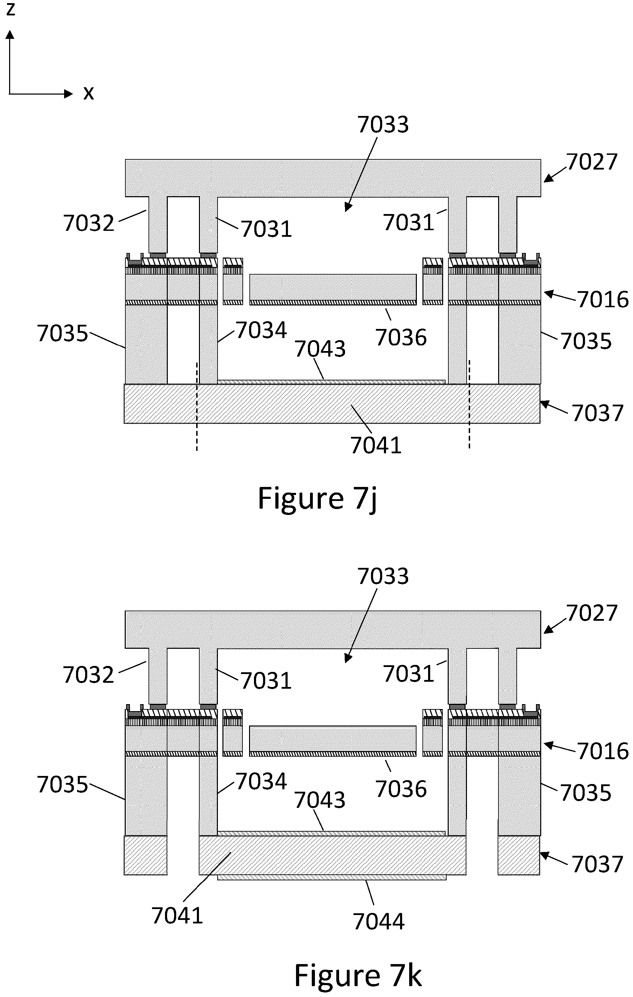

Figure 7j illustrates further steps of the fabrication method. These steps include providing a third wafer 7037 comprising a central glass region 7041, then placing the first wafer 7016 on top of the third wafer 7037 so that the central glass region 7041 in the third wafer faces the reflecting layer 7036. In this example, the third wafer 7037 is a glass wafer.

The following step comprises bonding the third wafer 7037 to the first wafer 7016, so that the one or more protruding walls 7031 of the second wafer 7027, the first set of bottom walls 7034 in the first wafer 7016 and the third wafer 3037 enclose the central region 7019 and the intermediate region 7020 of the first wafer 7016.

The method may comprise forming a first antireflection coating 7043 on the top surface of the central glass region 7041 of the third wafer 7037 before the step of placing the first wafer on top of the third wafer as shown in figure 7j.

Figure 7k illustrates the step comprising etching the third wafer 7037 so that the first set of bottom walls 7034 of the first wafer 7016, the one or more protruding walls 7031 of the second wafer 7027 and the central glass region 7041 of the third wafer 7037 form a tiltable housing structure 702 and the central glass region forms 7041 the bottom of the housing structure. The internal pressure of the housing structure may be vacuum pressure or a low pressure, i.e. preferably below 100 mbar. This option might apply to any embodiment in this disclosure.

The method may further comprise the step of forming a second antireflection coating 7044 on the bottom surface of the central glass region 7041 of the third wafer 7037 as shown in this figure. This option may apply to any embodiment in this disclosure.

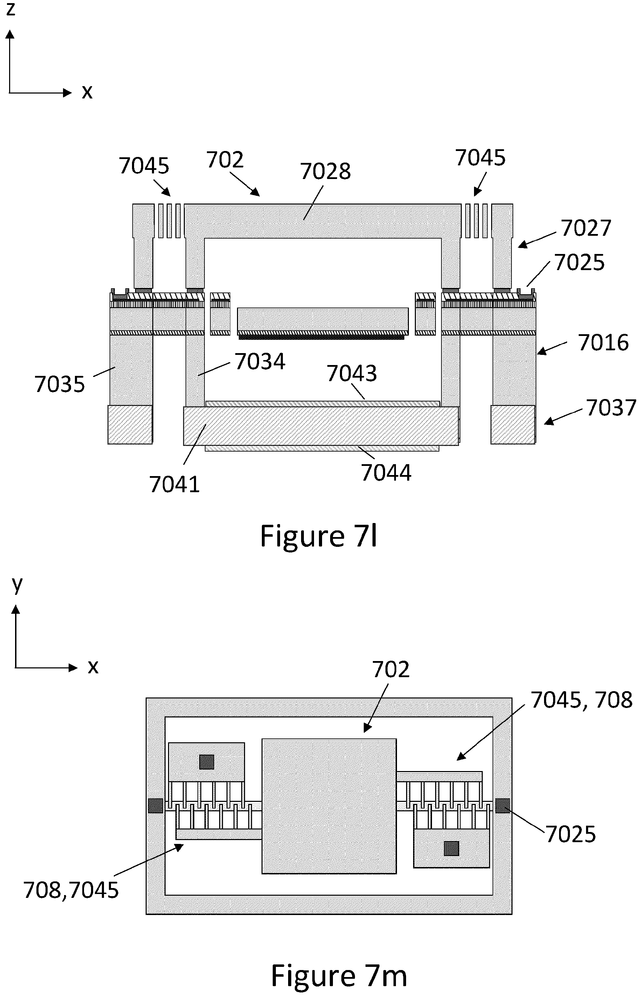

Figure 7l illustrates the steps of etching the third horizontal part 7030 of the second wafer 7027 and forming a structure comprising interdigitated fingers 7045 by patterning the second horizontal part 7029 on opposite sides of the first horizontal part 7028.

Figure 7m illustrates a top view of the arrangement shown in figure 7l. The interdigitated fingers 7045 forms the outer transducers 708 which are located on opposite sides of the housing structure 702.

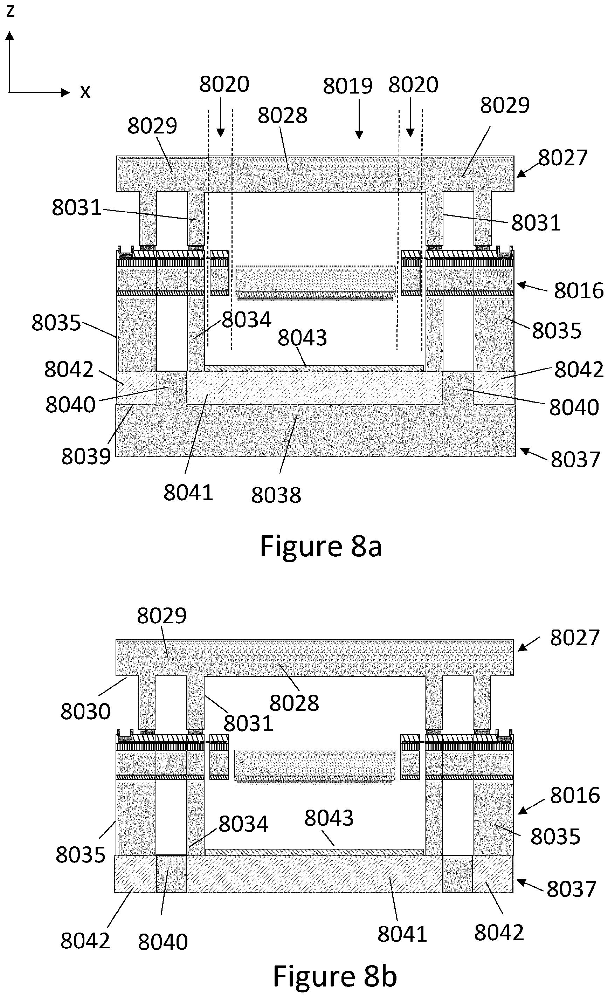

Figures 8a-c illustrate a few possible steps of the method for the fabrication of the arrangement in accordance with another embodiment of this disclosure.

The third wafer may comprise glass regions and semiconductor regions as shown in in figures 8a-b. For example, the third wafer 8037 may comprise a fourth horizontal part 8038 and a fifth horizontal part 8039, wherein he fifth horizontal part 8039 surrounds the fourth horizontal part 8038. The third wafer 8037 may further comprise one or more vertical walls 8040 located between the fourth and the fifth horizontal parts, wherein the central glass region 8041 is located on top of the fourth horizontal part 8038. The third wafer may further comprise a peripheral glass region 8042 on top of the fifth horizontal part 8039. The one or more vertical walls 8040 surround the central glass region 8041. The method may further comprise the steps of: (i) aligning the one or more vertical walls 8040 of the third wafer 8037 in the z-direction with the area of the first wafer which is located between the first set of bottom walls 8034 and the second set of bottom walls 8035 after the step of placing the first wafer 8016 on top of the third wafer 8037, (ii) grinding and polishing the bottom of the third wafer 8037 so that the bottom of the central glass region 8041 is revealed after bonding the third wafer 8037 to the first wafer 8016 and before etching the third wafer so that the first set of bottom walls 8034 of the first wafer, the one or more protruding walls of the second wafer 8031 and the central glass region 8041 of the third wafer form a housing structure 802.

Figure 8a illustrates the step of bonding the third wafer 8037 to the first wafer 8016, so that the one or more protruding walls 8031 of the second wafer 8027, the one or more vertical walls 8034 of the third wafer 8037 and the central glass region 8041 enclose the central region 8019 and the intermediate region 8020 of the first wafer 8016.

Figure 8b illustrates the step of grinding and polishing the bottom of the third wafer 8037 so that the bottom of the central glass region 8041 is revealed.

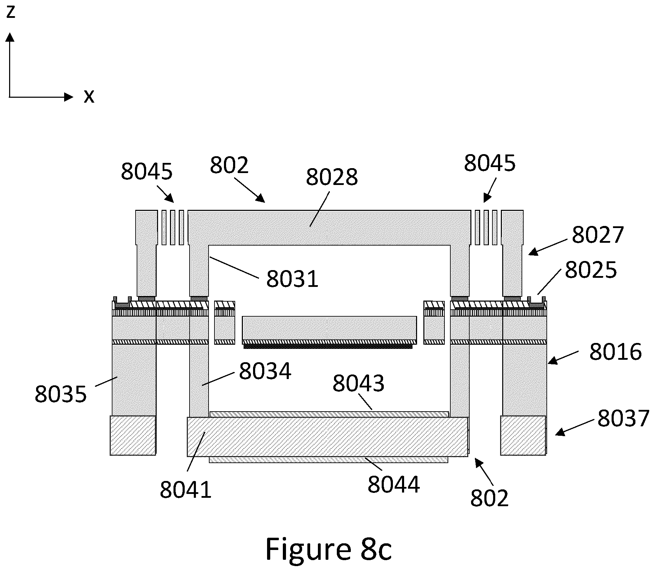

Figure 8c illustrates further steps of the method. These steps comprise etching the third wafer 8037 so that the first set of bottom walls 8034 of the first wafer 8016, the one or more protruding walls 8031 of the second wafer 8027 and the central glass region 8041 of the third wafer 8037 form a tiltable housing structure 802, and forming a structure comprising interdigitated fingers 8045 by patterning the second horizontal part 8029 on opposite sides of the first horizontal part 8028 in the second wafer 8027. Reference numbers 8043 and 8044 in figure 8c correspond to reference numbers 7043 and 7044,respectively in figure 7l.

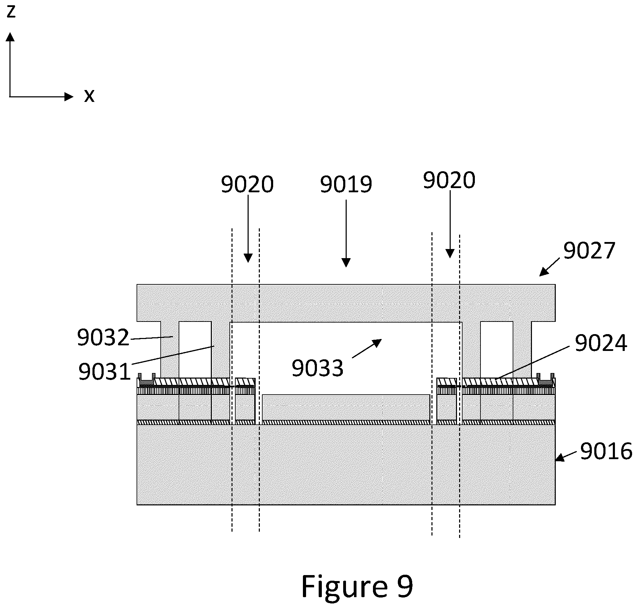

Figure 9 illustrates a first wafer and a second wafer bonded together using direct bonding. In this case, bond metals are not formed and the one the one or more protruding walls 9031 and the one or more additional protruding walls 9032 are directly bonded to the insulating layer 9024 so that the crater-like cavity 9033 encloses the central region 9019 and the intermediate region 9020 of the first wafer 9016.

## Claims

1. An arrangement comprising:
- a fixed structure, wherein the fixed structure defines a horizontal xy-plane, and there is vertical z-direction which is perpendicular to the xy-plane,
- a mirror configured to reflect an incoming light beam,
- a housing structure comprising a transparent surface, wherein the housing structure is attached to the fixed structure via a first torsion structure, and the first torsion structure allows the housing structure to rotate about the x-axis, and wherein the housing structure defines a x'-axis and a y'-axis, and the x'-axis is parallel to the x-axis and the y'-axis is parallel to the y-axis when the housing structure is in its rest position, and there is a vertical z'-direction which is perpendicular to the x'y'-plane, and wherein the mirror is inside the housing structure,
**characterized in that**
the mirror is suspended inside the housing structure via a second torsion structure which allows the mirror to rotate about the y'-axis, and wherein the transparent surface faces the reflecting surface of the mirror allowing the incoming light beam to reach the reflecting surface of the mirror,
and wherein the arrangement further comprises inner transducers located inside the housing structure, and the inner transducers are attached to the mirror and are configured to tilt the mirror inside to housing structure about the y'-axis,
and wherein the arrangement further comprises outer transducers located outside the housing structure, and the outer transducers are configured to tilt the housing structure about the x-axis.

2. An arrangement according to claim 1, wherein the arrangement further comprises electrical conductors, and wherein the electrical conductors are on top of the torsion structure, and wherein the electrical conductors extend from the fixed structure to the inner transducers, and the electrical conductors connect to the inner transducers a first set of voltage contacts located in the fixed structure allowing the electrical drive of the inner transducers.

3. An arrangement according to any of claims 1-2, wherein the housing structure hermetically seals the mirror.

4. An arrangement according to any of claims 1-3, wherein the outer transducers are piezoelectric actuators.

5. An arrangement according to any of claims 1-3, wherein the outer transducers are electrostatic drive actuators.

6. An arrangement according to claim 5, wherein each of the electrostatic drive actuators is a comb-shaped actuator comprising three or more fingers.

7. An arrangement according to claim 6 wherein the outer transducers comprise a first set of actuators and a second set of actuators, and wherein the first set of actuators and the second set of actuators are located on opposite sides of the housing structure, and each of the first set of actuators and the second set of actuators comprises at least one rotor electrode and at least one stator electrode arranged in an interdigitated shape, and wherein one end of the at least one rotor electrode is attached to the top of the housing structure, and the at least one stator electrode is adjacent to the at least one rotor electrode, and the at least one stator electrode is connected to a voltage connection allowing the electrical drive of the outer transducers.

8. An arrangement according to any of the previous claims, wherein the first torsion structure comprises two beams, and wherein the beams are arranged opposite to each other along the x-axis, and each beam extends from the fixed structure to the housing structure.

9. An arrangement according to claim 8, wherein the beams are straight beams.

10. An arrangement according to claim 8, wherein the beams are meander beams.

11. An arrangement according to any of claims 6-10, wherein the fingers of the comb- shaped actuators are perpendicular to the beams of the first torsion structure.

12. An arrangement according to any of the previous claims, wherein the second torsion structure comprises a pair of meander beams.

13. An arrangement according to any of the previous claims, wherein the second torsion structure comprises a pair of straight beams.

14. An arrangement according to any of the previous claims, wherein the inner transducers are piezoelectric actuators.

15. An arrangement according to any of the previous claims, wherein the inner transducers are electrostatic actuators.
